# EUROPEAN PATENT APPLICATION

(11) **EP 4 684 860 A1**
(43) Date of publication of application: **28.01.2026**
(21) Application number: 25188435.9
(22) Date of filing: 09.07.2025
(51) Int. Cl.: B01D 29/15, B01D 35/153

(54) **WATER TREATMENT ASSEMBLY**

(30) Priority: 25.07.2024 US 202418783833
(71) Applicant: Paragon Water Systems, Inc., Tampa, Florida 33635 (US)
(72) Inventor: SAHNI, Harkirat, Tampa, 33626 (US); NORRIS, Walker Allan, Chapin, 29036 (US); XIE, Roy, Zhongshan, 528400 (CN)
(74) Representative: IPAZ

(57) **Abstract**

A water treatment assembly is provided, including a filter head (12) configured for connection to a water supply line, the filter head including a rotatable shutoff valve (62), a sump assembly (30) releasably connected to the filter head, the sump assembly including a sump cap (32) releasably attached to a sump body (34) and defining an interior chamber (38), and the sump cap having cap ports (74, 76) in fluid communication with complementary head ports (68, 70) in the filter head, and a filter insert (40) releasably enclosed within the interior chamber, the filter insert having a filter media portion (42) and an endcap (46) secured to the media portion, the endcap having at least one port (86) configured for being in fluid communication with one of the cap ports and one of the head ports.

## Description

### BACKGROUND

The present invention relates generally to drinking water treatment systems, whether in a domestic or commercial environment, and more specifically to such systems employing disposable filter cartridges.

Such systems are typically connected to a water supply line, and provide filtering of incoming tap water for enhancing taste, mineral content and/or smell characteristics, and/or removing other target contaminants. The present system relates to such filter systems having a filter head connected to a water supply line, employing replaceable filter cartridges, and having an automatic shutoff of the supply line while the filter cartridge is being replaced.

Conventional water treatment systems of this type employ disposable filter cartridges including a rigid housing of plastic or metal, containing a filter media such as granulated carbon, carbon block, fibers, a Reverse Osmosis (RO) membrane or the like, as are well known in the art. Such cartridges have a working life of approximately 6 months to a year, depending on model and volume of use. At the end of the working life of the cartridge, the user needs to remove the existing cartridge and replace it with a new one. In most cases, the spent cartridge is disposed of.

There is a growing recognition of the amount of plastic solid waste being generated by modern consumers, with many companies attempting to reduce such waste. In the water treatment industry, this sentiment has been applied to the disposable water filter cartridges, with an effort to reduce the volume of discarded materials. In particular, there is a focus in the industry on the reduction of plastic cartridge waste.

Another design consideration of such water treatment systems is to configure the product so that the user can more easily exchange the filter cartridges. Proper location of the filter cartridge within the filter head is an important objective. While both commercial and residential applications for such systems are contemplated, one application of such systems is installation under a sink and/or in a cabinet, which are difficult to access and/or properly view during the cartridge replacement process. Thus, enhancing the location and engagement of the filter cartridge in the treatment head or filter head is very important. Also, the system should preferably be designed to avoid water leaks while the filter cartridge is being exchanged.

An example of a conventional water filter system using disposable cartridges is disclosed in US Patent No. 7,837,876, the contents of which are incorporated by reference. While the cartridge in the '876 patent is disposable, the concepts of cartridge-head alignment and engagement are addressed.

Thus, there is a need for a water filter or treatment system that addresses the objective of reducing the waste generated by the system, as well as providing an improved location and engagement arrangement, more easily accomplished by the user.

### SUMMARY

The above-listed need is met or exceeded by the present water treatment system featuring a reusable water treatment housing configured for use with disposable filter media inserts. Included in the present system is a filter head fixed to a substrate, such as a wall or cabinet, and a reusable media sump, also referred to as a sump assembly, that includes a sump cap and a sump body. In a preferred embodiment, the water treatment system contemplates multiple filter elements, including a sediment filter, a carbon filter, a Reverse Osmosis (RO) membrane, post carbon or remineralization filter and/or a post RO or remineralization filter. For each of the above-listed filter stages in the present system, each filter function is represented by a corresponding reusable sump assembly and a disposable filter or treatment element.

Included on the filter head are alignment structures for facilitating positive engagement with the sump assembly. Such features include a sump assembly/filter head connection that preferably includes a tactile indication of engagement of the sump assembly in the head. Preferably, this is achieved through use of a post or rib on one of the filter head and the sump cap that engages a complimentary groove on the other of the filter head and the sump cap to provide a tactile indication to the user that the sump assembly is positively engaged in the filter head. Another feature is a depending ramped tab on the filter head that engages a complementary arranged ramp on the sump to properly align the sump assembly as it is helically threaded into the filter head by the user. Additional alignment indicators are optionally provided to the filter head and the sump assembly to provide a visual indication to the user that the sump assembly and the filter head are properly assembled. Such indicators preferably include colored or etched bands on the filter head and sump assembly that are in alignment once the sump assembly is fully engaged.

Another aspect of the present water treatment system is that the filter or treatment media is disposable, and the sump assembly is reusable. Accordingly, the sump cap and the sump body are provided with enhancements for facilitating disassembly and reassembly, and proper connection of the treatment media inserts. A preferred configuration of the filter media insert is an endcap with an outlet spout having a noncircular configuration that matingly engages a complementary noncircular seat or recess in an underside of the sump cap. The noncircular outlet spout is in fluid communication with an outlet port of the sump cap that is in turn in fluid communication with an inlet port of the filter head to distribute treated water to the filter head, and through other treatment modules in the present water treatment system.

In a preferred embodiment, the noncircular spout has a bilaterally symmetrical shape defined by opposing arcs of equal radius. Sealing elements, such as O-rings are placed on an exterior of the outlet spout, preferably on an upper portion of the spout, to prevent the mixing of treated water with untreated water.

Exterior surfaces of at least one of the sump cap and sump body are provided with gripping elements, including but not limited to ribs, checkering or other surface treatments to enhance positive gripping by the user as the sump cap is unthreaded from the sump body for exchanging the treatment media insert. Also, each water treatment module, sediment, carbon, RO, remineralization, etc. is preferably provided with visual indicia to assist the user in replacing the appropriate media in the designated sump assembly. In addition, the respective sump assemblies are preferably provided with mechanical alignment features that prevent the insertion of incorrect media in the sump assembly.

In a preferred embodiment, the sump cap is provided with an inlet port for receiving untreated water, and outlet port for dispensing treated water, and a key feature. Preferably, the inlet port, the outlet port and the key feature are linearly aligned for enhanced connection between the sump assembly and the filter head. The filter head preferably has complementary port connections and a key feature that are in alignment with those features of the sump cap once the sump assembly is properly aligned with the head.

More specifically, a water treatment assembly is provided, including a filter head configured for connection to a water supply line, the filter head including a rotatable shutoff valve a sump assembly releasably connected to the filter head, the sump assembly including a sump cap releasably attached to a sump body and defining an interior chamber, and the sump cap having cap ports in fluid communication with complementary head ports in the filter head, and a filter insert releasably enclosed within the interior chamber, the filter insert having a filter media portion and an endcap secured to the media portion, the endcap having at least one port configured for being in fluid communication with one of the cap ports and one of the head ports.

In an embodiment, the filter head has a housing with a lower margin, and at least one alignment tab depending from the lower margin, and the sump cap has a complementary formation on an outer surface, the tab and the formation each having complementary ramps for guiding the sump assembly into engagement with the filter head. Also contemplated is that the alignment tab has the ramp at one end and a vertical surface at an opposite end, and the sump cap has a vertical stop constructed and arranged for engaging the vertical surface upon full and aligned engagement between the sump cap and the head.

In an embodiment, the shutoff valve is rotatable within the filter head, and has a first head port, a second head port and a depending key formation all in linear alignment, and the sump cap has a first cap port, a second cap port and a lock recess all in respective complementary alignment with the head ports and the key formation. The port of the filter insert is constructed and arranged to be in alignment with the second cap port of the sump cap and also with the second head port, with all of these ports being in fluid communication with each other.

In an embodiment, the sump cap has an upper surface with at least one laterally projecting support tab, and at least one tab is provided with a tactile head engagement feature. Preferably, the filter head has a housing with at least one interior landing for accommodating an associated one of the at least one support tabs, the filter head further has a complementary tactile formation for engaging the tactile head engagement feature on the sump cap. In a preferred embodiment, the sump cap and the sump body each have a plurality of grip enhancing formations.

In an embodiment, the sump cap has an interior surface with the sump cap engages said filter insert on an interior surface with one of an inwardly projecting alignment rib and a complementary track of spaced parallel ribs, and the alignment formation of the endcap is the other of the two features. Also preferred is that the head is provided with at least one mounting aperture on both an upper surface and on a rear surface.

In another embodiment, a sump assembly is provided for use with a water system including a filter head connected to a water supply, the filter head including a housing enclosing a rotatable shutoff valve, the valve having a first head port, a second head port and a depending key formation all in linear alignment, the filter head has a housing with a lower margin, and at least one alignment tab depending from the lower margin. The sump assembly includes a sump cap having an upper surface with a first cap port, a second cap port and a lock recess all in respective complementary alignment and in fluid communication with the head ports and in engageable alignment with the key formation, the sump cap further including a pair of opposed, laterally projecting support tabs, and at least one such tab is provided with a tactile head engagement feature, the sump cap has a complementary formation on an outer surface, the alignment tab and the formation each having complementary ramps for guiding the sump assembly into engagement with the filter head. A sump body is configured for releasable engagement with the sump cap and with the sump cap defining an interior chamber; and the interior chamber being configured for accommodating a filter insert releasably enclosed within the interior chamber, the filter insert having a filter media portion and an endcap secured to the media portion, the endcap having at least one port configured for being in fluid communication with one of the cap ports and one of the head ports.

In an embodiment, the sump cap has an interior surface with an inwardly projecting alignment rib, constructed and arranged for accommodating a complementary track on a vertical skirt of the endcap. Preferably, the sump cap is threadably engageable with the sump body, and the grip enhancing formations are laterally projecting, parallel ribs.

In a further embodiment, a filter insert is provided for use in a water treatment assembly including a filter head configured for connection to a water supply line, the filter head including a rotatable shutoff valve, a sump assembly releasably connected to the filter head, the sump assembly including a sump cap releasably attached to a sump body and defining an interior chamber, and the sump cap having cap ports in fluid communication with complementary head ports in the filter head. The filter insert includes a filter media portion with an upper media surface and a lower media surface, an endcap secured to the upper media surface, the endcap having an endcap port with a non-circular shape when viewed from above, the endcap port configured for engaging a complementary noncircular recess in the sump cap and being in fluid communication with one of the cap ports and one of the head ports, the endcap having a generally planar upper surface from which the endcap port vertically projects, and a depending peripheral skirt extending over the filter media, the peripheral skirt having at least one alignment formation, a bottom cap secured to the lower media surface and configured for location within the sump body; and the filter insert configured for being releasably enclosed within the interior chamber.

In an embodiment, the endcap port is bilaterally symmetrical about a horizontal center line and has a pair of vertically spaced seals, preferably O-rings. Preferably, the O-rings are located on an upper half of the endcap port. In an embodiment, an endcap tab projects vertically from the generally planar upper surface.

### BRIEF DESCRIPTION OF THE DRAWINGS

FIG. 1 is a top perspective view of the present water treatment assembly;
FIG. 2 is a fragmentary front perspective of the present water treatment assembly in a partially assembled position;
FIG. 3 is a fragmentary front perspective of the present water treatment assembly in a further partially assembled position;
FIG. 4 is a fragmentary front perspective of the present water treatment assembly in a still further partially assembled position;
FIG. 5 is a vertical cross-section of the present water treatment assembly showing water flow paths using a first filter media;
FIG. 6 is a vertical cross-section of the present water treatment assembly showing a second filter media;
FIG. 7 is a vertical cross-section of the present water treatment assembly showing a first endcap construction;
FIG. 8 is a vertical cross-section of the present water treatment assembly showing a second endcap construction;
FIG. 9 is a fragmentary top perspective view of the present sump cap;
FIG. 10 is a rear perspective view of the present filter head;
FIG. 11 is a bottom view of the present filter head;
FIG. 12 is a top view of the present sump cap;
FIG. 13 is a fragmentary vertical cross-section showing the insert and sump installed in the filter head taken along the line 13-13 of FIG. 1 and in the direction generally indicated;
FIG. 13A is a fragmentary vertical cross-section taken along the line 13A-13A of FIG. 1 and in the direction generally indicated;
FIG. 14 is a bottom perspective view of the present sump cap;
FIG. 15 is a fragmentary top perspective view of the present insert top endcap;
FIG. 15A is a top view of the present insert top endcap; and
FIG. 16 is an exploded perspective view of the sump assembly and insert.

### DETAILED DESCRIPTION

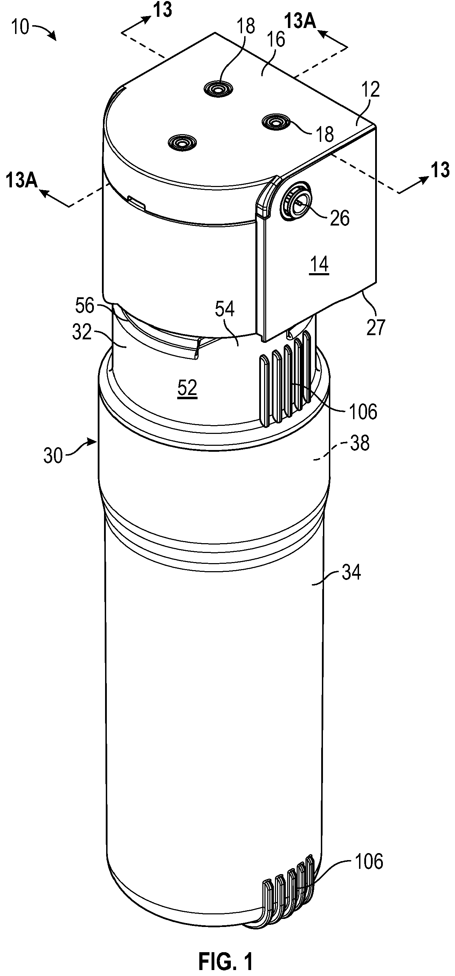

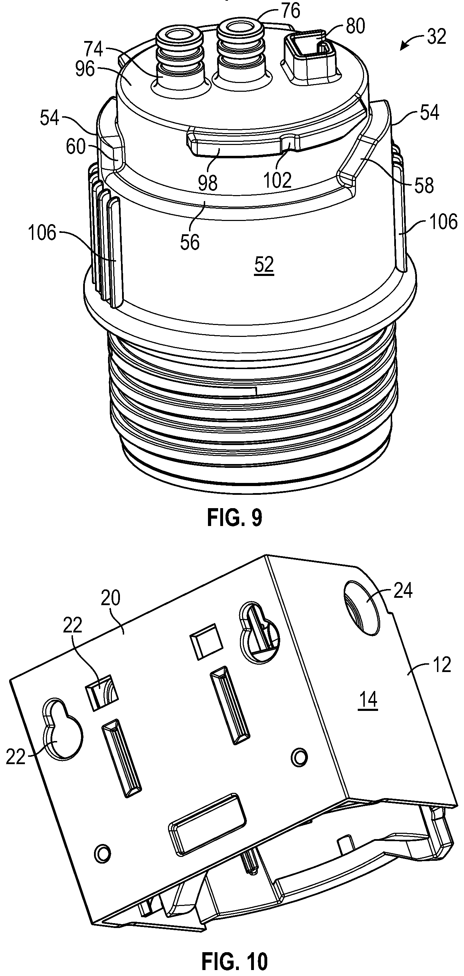

Referring now to FIGs. 1-4, 10 and 19, the present water treatment system is generally designated 10 and includes a filter head 12 having an exterior housing 14 configured for being secured to a substrate (not shown), such as a wall or a panel of a cabinet. A top housing surface 16 has a plurality of mounting apertures 18. A rear housing wall 20 (FIG. 10) includes a plurality of rear mounting apertures 22. Also included on the filter head housing 14 is a water supply line connection inlet 24 for receiving tap water, and a treated water outlet 26, configured for connection to the existing water system, and ultimately a faucet.

A lower edge or margin 27 of the filter head housing 14 has at least one depending alignment tab 28, discussed in greater detail below. A sump assembly 30 is releasably attachable or connectable to the filter head 12, and includes a sump cap 32 and a sump body 34. Preferably, the sump cap 32 is releasably attached to the sump body 34, as by the use of helical threads 36 (FIG. 19), and together, the sump cap and sump body define an interior chamber 38.

A filter insert 40 is configured for being releasably retained within the interior chamber 38 and has a filter media portion 42 which in the present application refers to any one of a number of water treatment media, including, but not restricted to granulated carbon, carbon block, fiber, Reverse Osmosis (RO) membrane, or the like, which are configured for performing at least one of the following treatment functions, including sediment removal, post carbon or remineralization treatment and/or a post RO. To an upper end 44 of the media portion 42 is attached an endcap 46. A feature of the present water treatment system 10 is that the filter insert 40 is disposable upon its expiration, while the sump cap 32 and sump body 34 are reusable, thus reducing the solid waste generated by use of the present system.

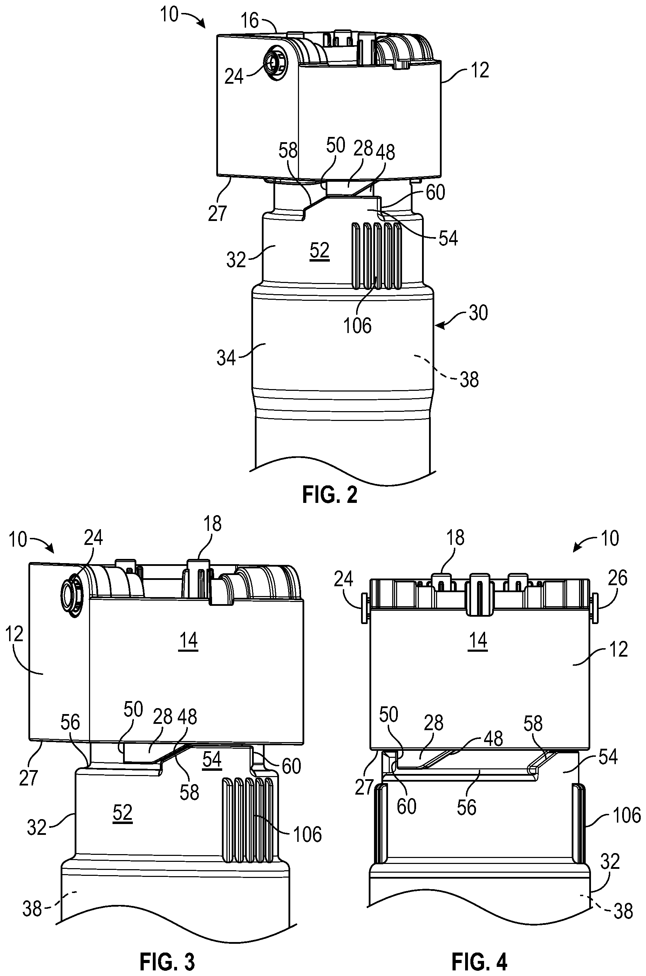

Referring now to FIGs. 2-4 and 9, the at least one alignment tab 28 depending from the lower housing edge 27 has a ramp 48 at one end, and a vertical edge 50 at an opposite edge. Similarly, the sump cap 32 has an outer surface 52 with at least one vertically projecting formation 54 which is complementary to the alignment tab 28. Each vertically projecting formation 54 is part of a peripheral track 56 on the outer surface 52. As seen in FIGs. 2-4, as the sump assembly 30 is engaged with the filter head 12, and rotated (preferably clockwise) relative to the filter head, the complementary tab 28 and the vertically projecting portion 54 engage each other to properly locate the sump assembly 30 into position relative to the filter head 12. As seen in FIG. 3, during the location process, the ramp 48 of the alignment tab 28 slidingly engages a ramp 58 on the vertically projecting formation 54. As seen in FIG. 4, once the sump assembly 30 is fully engaged in the filter head 12, the vertical edge 50 of the alignment tab 28 abuts a vertical stop surface 60 on the track 56.

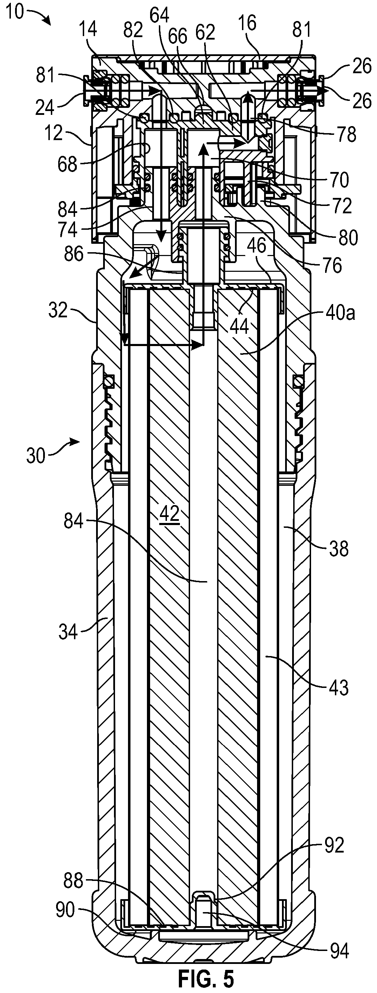

Referring now to FIGs. 5, 6, 9 and 13, the filter head 12 includes a rotatable shutoff valve 62 having an upper boss 64 engaging a recess 66 in the filter head housing 14. Included on the shutoff valve 62 is a first head port 68, a second head port 70, and a depending key formation 72, all in linear alignment with teach other. In the preferred embodiment, the first head port 68 receives untreated tap water from the housing inlet 24 and allows the water to flow to a first cap port 74 on the sump cap 32. After the water has been treated by the filter insert 40, the treated water flows from the insert through a second cap port 76 which is in fluid communication with the second head port 70, allowing the treated water to flow through a passage 78 that is in communication with the housing outlet 26 as the sump assembly 30 is fully engaged in the filter head 12. In this position, the depending key formation 72 of the shutoff valve 62 is engaged with a lock recess 80 on the sump cap for enhancing proper alignment.

It will be understood that, due to the mating engagement and fluid communication between the sump cap 32 and the shutoff valve 62, as the sump cap is unscrewed from the filter head 12, the passageway 78 will no longer be in communication with the housing outlet 26, and water flow will stop. A seal 81, such as an O-ring, prevents leakage from this point as the shutoff valve 62 is rotated relative to the filter head housing 14. A similar seal 82 protects the housing inlet 24 from leakage relative to the shutoff valve 62. Further, the sump cap 32 is preferably provided with at least one and preferably multiple seals 84 on the first and second cap ports 74, 76 to prevent unwanted leakage.

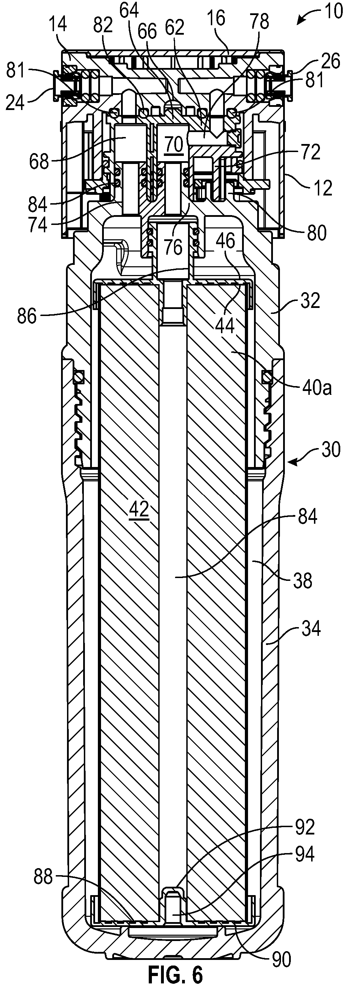

Referring again to FIGs. 5 and 6, water flowing from the housing inlet 24 into the first cap port 74 flows into the filter insert 40 on an outer periphery thereof, and migrates radially inwardly through the media portion 42. A central core 84 in the media portion 42 allows the treated water to migrate upward to pass through an endcap port or outlet 86. From the outlet 86, the treated water flows through the second cap portion 76 into the second head port 70 and eventually to the housing outlet 26. A main difference between the filter inserts 40 and 40a of FIGs. 5 and 6 is that the insert 40 in FIG. 5 is surrounded by a pleated membrane 43 for enhanced filtration and for extending the operational life of the insert 40 depending on the application.

Opposite the endcap 46, a lower media surface 88 is secured to a bottom cap 90 having a locating formation 92, here a recess, for accommodating a vertically projecting locating lug 94 at the bottom of the sump body 34. It will be appreciated that the dimensions and/or configuration of the locating lug 94 may vary with the type of filter media to ensure that the appropriate filter media 42 is located within the interior chamber 38 depending on the desired function of the filter insert 40.

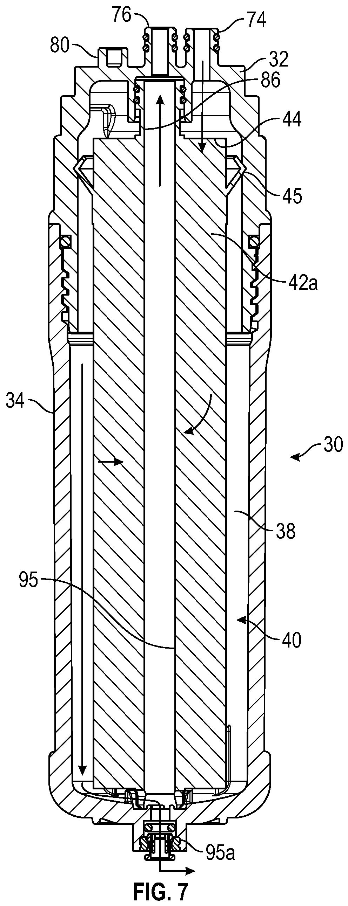

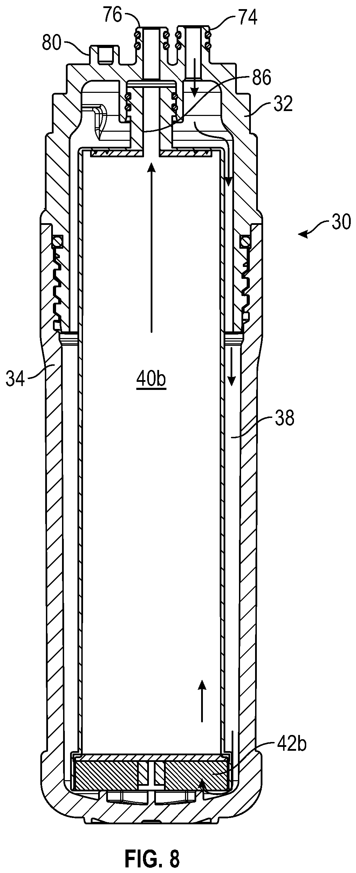

Referring now to FIGs. 7 and 8, different filter inserts 40 are shown having distinct filter media 42 depending on the function. In FIG. 7, the filter media 42 is designated as 42a and is contemplated as being used for Reverse Osmosis (RO). The media 42a is a rolled RO membrane and configured for being rolled to create a central RO treated water passage 95. Incoming water flows into the passage 38, then into the membrane 42a. An annular seal Concentrate water not passing through the membrane 42a flows downward to a quick connect drain fitting 95a in the sump body 34 receives and eliminates concentrate water not passing through the RO membrane 42a.

Similarly, in FIG. 8, the media 42b is contemplated for use in remineralization. A remineralization media 42b as known in the art is located at the bottom of the interior chamber 38 and receives water flowing down through the chamber by gravity.. The water is then forced by internal pressure into the media 42b from below and migrates upwardly through the media and into the insert 40b, where it flows through the endcap port outlet 86 and into the second cap port 76. A mesh screen 96 atop the media 42b prevents movement of media particles into the treated water flow.

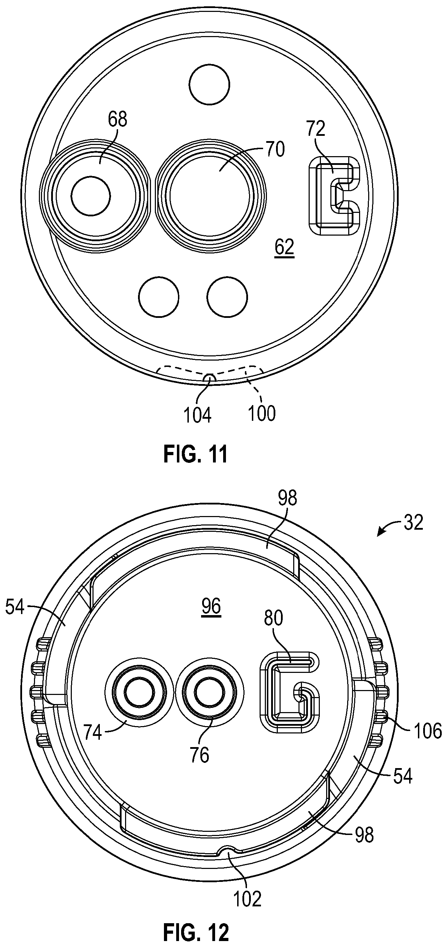

Referring now to FIGs. 11 and 12, FIG. 11 shows a portion of the underside of the filter head 12, namely the shutoff valve 62, and FIG. 12 shows the complementary formations of the sump cap 32.

Referring now to FIGs. 9, 11, 12 and 13, another feature of the present water treatment system 10 is that the sump cap 32 is configured to provide a tactile sensation to the user when the sump cap is fully engaged in the filter head 12. This is accomplished by providing the sump cap 32 with an upper surface 97 with at least one laterally projecting support tab 98. Preferably, there are a pair of such tabs 98 disposed 180° apart from each other, in other words projecting in opposite directions from the sump cap 32. The support tabs 98 are constructed and arranged for engaging at least one arcuate interior landing 100 on the filter head housing 14. As the sump assembly 30 is inserted into the head 12, the sump cap 32 is pushed sufficiently into the filter head housing 14 so that the support tabs 98 are above or past the landings 100. Then, as the sump assembly 30 is rotated relative to the head 12, the support tabs 98 slidably engage the landings 100 so that the sump assembly is supported on the landings. Preferably, there are at least two landings 100 to match the number of support tabs 98.

In addition, the tactile engagement sensation is provided by the support tabs 98 and the landings 100 having complementary formations. In the preferred embodiment, at least one of the support tabs 98 has a notch or groove 102, and the landing 100 has a vertically projecting rib or post 104 that snappingly engages the groove once the sump assembly 30 is properly engaged in the filter head 12. It is contemplated that alternatively, the landing 100 is provided with the groove 102 and the support tab 98 has the rib 104.

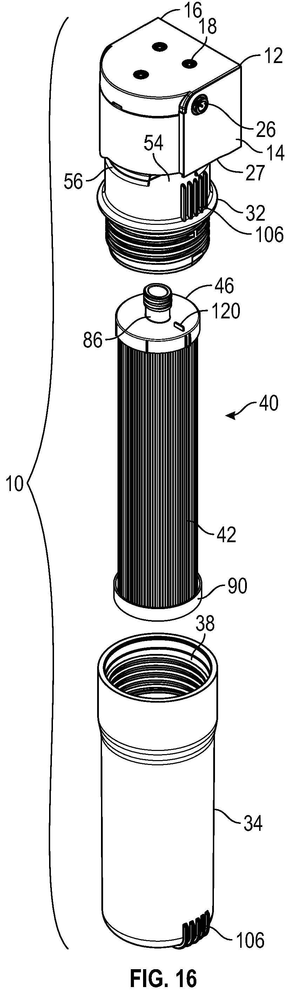

Referring again to FIGs. 1-4 and 16, another feature of the present water treatment assembly is that the sump cap 32 and said sump body 34 each have a plurality of grip enhancing formations 106 that enhance the user's grip on the parts as they are disassembled, or preferably unscrewed relative to each other. In the preferred embodiment, the gripping formations 106 are laterally-projecting, spaced, parallel ribs, however, other configurations are contemplated, including pebble texture, checkering and the like as are known in the art.

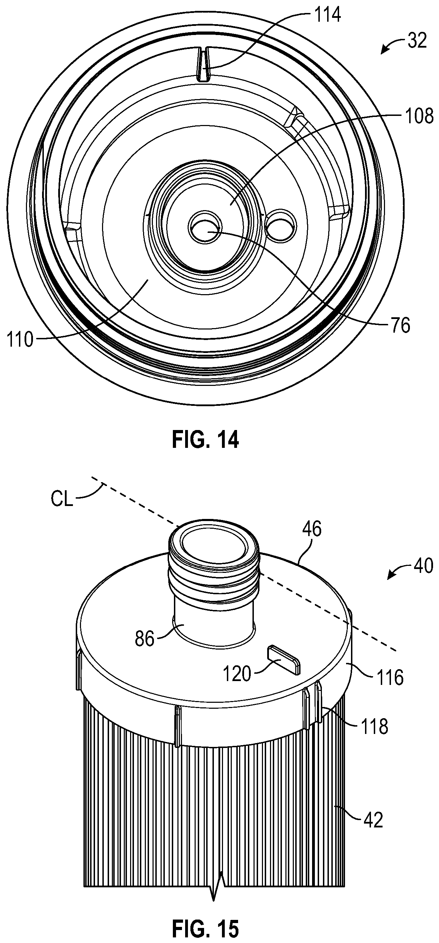

Referring now to FIGs. 14-16, another feature of the present water treatment system 10 is that the filter insert 40 is provided with alignment formations that enhance the location of the insert within the interior chamber 38. One such alignment formation is that the endcap port 86 has a noncircular shape when viewed from above. In other words, the endcap port 86 is bilaterally symmetrical about a centerline CL that is transverse to a longitudinal axis of the sump assembly 30. Thus, the profile of the endcap port 86 is a pair of opposing, symmetrical arcs that create an oval shape.

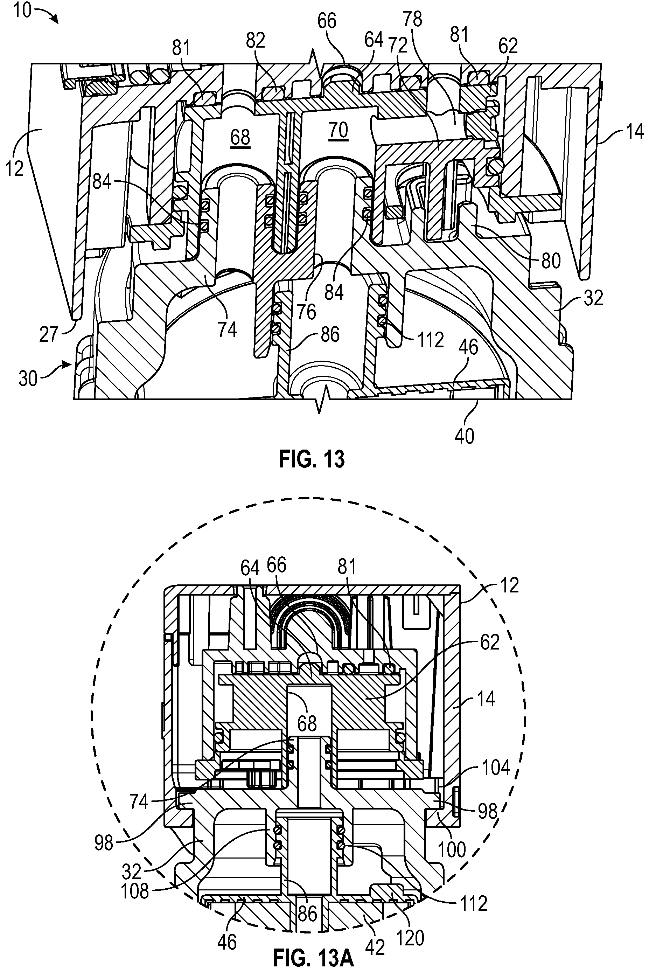

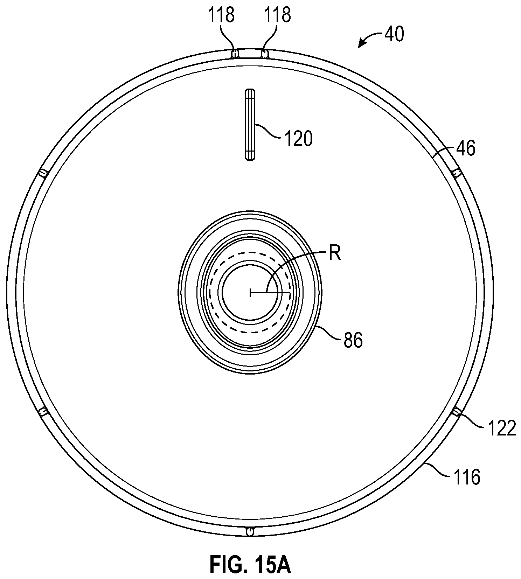

Referring now to FIG. 15A, in a preferred embodiment, the symmetrical opposing arcs that define the shape of the endcap port each have a radius to a hypothetical center point that is greater than a radius R of a circle (shown dashed) located within the port. In other words, the arcs forming the noncircular port would each form a larger diameter circle than that formed by the radius R. In addition, an endcap port seat 108 on an underside 110 of the sump cap 32 matingly accommodates the endcap port 86, and as such has a complementary noncircular shape, and also is in fluid communication with the second cap port 76. A sealing relationship is enhanced between the endcap 46 and the sump cap 32 through the use of at least one and preferably two endcap port seals 112 (FIG. 13). In the preferred embodiment, the endcap port seals 112, which are preferably O-rings, are located on an upper half of the endcap port 86.

Another alignment feature of the filter insert 40 is that the sump cap underside or interior 110 has at least one inwardly projecting alignment rib 114. On the endcap 46, a depending peripheral skirt 116, which extends over the filter media portion 42, has a complementary track 118 that is constructed and arranged for engaging the alignment rib 114. Preferably, as the filter insert 40 is positioned in the interior chamber 38, the alignment rib 114 is slidingly engaged in the space defined by the track 118. It is also contemplated that the cap interior 110 is provided with the track 118 and the alignment rib is provided on the skirt 116. As seen in FIG. 15, an endcap tab 120 projects vertically from the generally planar upper surface 97 to facilitate visual user location of the insert within the sump body 34. In addition supplemental ribs 122 on skirt 116 facilitate centering of the filter insert 40 within the sump body 34.

While a particular embodiment of the present water treatment system using disposable media inserts has been described herein, it will be appreciated by those skilled in the art that changes and modifications may be made thereto without departing from the invention in its broader aspects and as set forth in the following claims.

## Claims

1. A water treatment assembly, comprising:
a filter head (12) configured for connection to a water supply line, said filter head including a rotatable shutoff valve (62);
a sump assembly (30) releasably connected to said filter head, said sump assembly including a sump cap (32) releasably attached to a sump body (34) and defining an interior chamber (38), and said sump cap having cap ports (74, 76) in fluid communication with complementary head ports (68, 70) in said filter head;
a filter insert (40) releasably enclosed within said interior chamber, said filter insert having a filter media portion (42) and an endcap (46) secured to said media portion, said endcap having at least one port (86) configured for being in fluid communication with one of said cap ports and one of said head ports.

2. The water treatment assembly of claim 1, wherein said filter head (12) has a housing (14) with a lower margin (27), and at least one alignment tab (28) depending from said lower margin, and said sump cap (32) has a complementary formation (54) on an outer surface, said tab and said formation each having complementary ramps (48, 58) for guiding said sump assembly into engagement with said filter head.

3. The water treatment assembly of claim 2, wherein said alignment tab (28) has said ramp (48) at one end and a vertical surface (50) at an opposite end, and said sump cap (32) has a vertical stop (60) constructed and arranged for engaging said vertical surface upon full and aligned engagement between said sump cap and said head.

4. The water treatment assembly of claim 1, wherein said shutoff valve (62) is rotatable within said filter head (12), and has a first head port (68), a second head port (70) and a depending key formation (72) all in linear alignment, and said sump cap (32) has a first cap port (74), a second cap port (76) and a lock recess (80) all in respective complementary alignment with said head ports and said key formation.

5. The water treatment assembly of claim 4, wherein said port (86) of said filter insert (40) is constructed and arranged to be in alignment with said second cap port (76) of said sump cap (32) and also with said second head port (70), with all of said ports being in fluid communication with each other.

6. The water treatment assembly of claim 1, wherein said sump cap (32) has an upper surface (97) with at least one laterally projecting support tab (98), and at least one said tab is provided with a tactile head engagement feature.

7. The water treatment assembly of claim 6, wherein said filter head (12) has a housing (14) with at least one interior landing (100) for accommodating an associated one of said at least one support tabs (98), said filter head further has a complementary tactile formation for engaging said tactile head engagement feature on said sump cap.

8. The water treatment assembly of claim 1, wherein said sump cap (32) and said sump body (34) each have a plurality of grip enhancing formations (106).

9. The water treatment assembly of claim 1, wherein said sump cap (32) has an interior surface with an inwardly projecting alignment rib (104), and said endcap (46) has a complementary track (118) on a vertical skirt (116) that accommodates said alignment rib.

10. The water treatment assembly of claim 1, wherein said filter head (12) is provided with at least one mounting aperture (18, 22) on both an upper surface (16) and on a rear surface (20).

11. A sump assembly (30) for use with a water system including a filter head (12) connected to a water supply, said filter head including a housing (14) enclosing a rotatable shutoff valve (62), said valve having a first head port (68), a second head port (70) and a depending key formation (72) all in linear alignment, said filter head has a housing (14) with a lower margin (27), and at least one alignment tab (28) depending from said lower margin, said sump assembly comprising:
a sump cap (32) having an upper surface with a first cap port (74), a second cap port (76) and a lock recess (80) all in respective complementary alignment and in fluid communication with said head ports and in engageable alignment with said key formation, said sump cap further including a pair of opposed, laterally projecting support tabs (98), and at least one said tab is provided with a tactile head engagement feature (106), said sump cap (32) has a complementary formation on an outer surface, said alignment tab and said formation each having complementary ramps (58) for guiding said sump assembly into engagement with said filter head;
a sump body (34)configured for releasable engagement with said sump cap (32) and with said sump cap defining an interior chamber (38); and
said interior chamber (38) being configured for accommodating a filter insert (40) releasably enclosed within said interior chamber, said filter insert having a filter media portion (42) and an endcap (46) secured to said media portion, said endcap having at least one port (86) configured for being in fluid communication with one of said cap ports and one of said head ports.

12. The sump assembly of claim 11, wherein said sump cap (32) has an interior surface with an inwardly projecting alignment rib (114), constructed and arranged for accommodating a complementary track (118) on a vertical skirt (116) of said endcap.

13. The sump assembly of claim 11, wherein said sump cap (32) and said sump body (34) each have a plurality of grip enhancing formations (106).

14. The sump assembly of claim 13, wherein said sump cap (32) is threadably engageable with said sump body (34), and said grip enhancing formations (106) are laterally projecting, parallel ribs.

15. A filter insert (40) for use in a water treatment assembly including a filter head (12) configured for connection to a water supply line, the filter head including a rotatable shutoff valve (62), a sump assembly (30) releasably connected to the filter head, the sump assembly including a sump cap (32) releasably attached to a sump body (34) and defining an interior chamber(38), and the sump cap having cap ports (74, 76) in fluid communication with complementary head ports (68, 70) in the filter head, said filter insert comprising:
a filter media portion (42) with an upper media surface and a lower media surface (88);
an endcap (46) secured to said upper media surface, said endcap having an endcap port (86) with a non-circular shape when viewed from above, said endcap port configured for engaging a complementary noncircular recess (108) in the sump cap and being in fluid communication with one of said cap ports and one of said head ports;
said endcap (46) having a generally planar upper surface (97) from which said endcap port vertically projects, and a depending peripheral skirt (116) extending over said filter media, said peripheral skirt having at least one alignment formation(118);
a bottom cap (90) secured to said lower media surface (88) and configured for location within the sump body; and
said filter insert (40) configured for being releasably enclosed within the interior chamber.

16. The filter insert of claim 15, wherein the sump cap (32) engages said filter insert (40) on an interior surface with one of an inwardly projecting alignment rib (114) and a complementary track (118) of spaced parallel ribs, and said alignment formation of said endcap is the other of said two features.

17. The filter insert of claim 15, wherein said endcap port (86) is bilaterally symmetrical about a horizontal center line and has a pair of vertically spaced O-rings (112).

18. The filter insert of claim 17, wherein said O-rings (112) are located on a upper half of said endcap port (86).

19. The filter insert of claim 18, further including an endcap tab (120) projecting vertically from said generally planar upper surface (97).
